# EUROPÄISCHE PATENTSCHRIFT

(11) **EP 1 157 820 B1**
(45) Veröffentlichungstag und Bekanntmachung des Hinweises auf die Patenterteilung: **29.09.2004**
(21) Anmeldenummer: 01111806.4
(22) Anmeldetag: 16.05.2001
(51) Int. Cl.: B32B 15/01, H01R 13/03, C22C 9/06, C22C 13/00

(54) **Elektrisch leitfähiges Metallband und Steckverbinder**
Metal strip with high electric conductibility and connector made from it
Bande métallique à haute conductibilité électrique et connecteur fabriqué avec ce produit

(30) Priorität: 20.05.2000 DE 10025107
(43) Veröffentlichungstag der Anmeldung: 28.11.2001
(73) Patentinhaber: KM Europa Metal Aktiengesellschaft, 49074 Osnabrück (DE)
(72) Erfinder: Schleicher, Klaus, 52222 Stolberg (DE); Rumbach, Albert, 52076 Aachen (DE); Gebhardt, Jürgen, Dr., 49086 Osnabrück (DE); Adler, Udo, 52249 Eschweiler (DE)
(74) Vertreter: Pietrzykowski, Anja

(56) Entgegenhaltungen:
- EP-A- 0 443 291
- DE-C- 4 443 461
- US-A- 4 971 758
- US-A- 5 508 001
- US-A- 5 849 424
- US-A- 5 911 513
- PATENT ABSTRACTS OF JAPAN vol. 1998, no. 08, 30. Juni 1998 (1998-06-30) -& JP 10 060562 A (FURUKAWA ELECTRIC CO LTD:THE), 3. März 1998 (1998-03-03)
- PATENT ABSTRACTS OF JAPAN vol. 1998, no. 08, 30. Juni 1998 (1998-06-30) -& JP 10 058184 A (HITACHI LTD), 3. März 1998 (1998-03-03)

## Beschreibung

Die Erfindung betrifft ein elektrisch leitfähiges Metallband zur Fertigung von elektrischen Kontaktbauteilen gemäß den Merkmalen im Oberbegriff des Patentanspruchs 1 sowie einen Steckverbinder gemäß Patentanspruch 2.

Steckkontaktverbindungen werden in elektrotechnischen Anwendungen benötigt. Man versteht hierunter grundsätzlich eine mechanische Anordnung aus Stecker und Steckerhülse zum Öffnen und Schließen einer elektrisch leitenden Verbindung. Steckkontaktverbindungen kommen in unterschiedlichsten Anwendungsbereichen zum Einsatz, beispielsweise in der Kraftfahrzeugelektrik, der Nachrichtentechnik oder der Industrieanlagenelektronik.

Ein übliches Fertigungsverfahren derartiger Steckverbinder ist, Rohlinge aus einem Kupfer- bzw. einem Kupferlegierungsband auszustanzen und diese zu Steckverbindern weiter zu verarbeiten. Kupfer hat eine hohe elektrische Leitfähigkeit. Zum Schutz gegen Korrosion und Verschleiß sowie zur Erhöhung der Oberflächenhärte werden die Kupfer- bzw. Kupferlegierungsbänder vorab verzinnt. Zinn eignet sich wegen seiner guten Korrosionsbeständigkeit besonders als Überzugsmaterial für Kupfer. Neben anderen Beschichtungsverfahren ist der Auftrag der Beschichtung im Schmelztauchverfahren technischer Standard.

In diesem Zusammenhang sind unterschiedlichste Zinnlegierungen zur Oberflächenbeschichtung des Basiswerkstoffs bekannt, insbesondere auch Zinn-Silber-Legierungen, da diese zu den sehr guten Kontaktwerkstoffen zählen.

Die EP 0 443 291 B1 offenbart ein Steckverbinderpaar, bei dem der Basiswerkstoff eines Steckerelements mit Reinzinn oder einer Zinn-Blei-Legierung beschichtet ist, während das andere Steckerelement eine auf schmelzflüssigem Wege aufgebrachte härtere Oberflächenbeschichtung aus einer Legierung aufweist, die unter anderem bis zu 10 Gew.-% Silber enthält. Neben Silber werden noch eine Reihe weiterer möglicher Legierungsmetalle vorgeschlagen. Dieser Ansatz ist richtungsweisend für die Herstellung qualitativ hochwertiger Steckverbinder mit gleichbleibend niedrigem Kontaktwiderstand und möglichst geringen Steck- und Ziehkräften.

Bezüglich des Basiswerkstoffs CuFe₂P ist anzumerken, dass er einen relativ hohen Eisenanteil aufweist, und zwar in einer Größenordnung von etwa 2,2 bis 2,6 Gew.%. Dies führt dazu, dass der Kupferwerkstoff ferromagnetisch werden kann und eine geringere Federkraft aufweist. Die aus einem Metallband letzlich gefertigten Steckverbinder sind dadurch nur eingeschränkt in der Praxis einsetzbar.

Darüber hinaus führt der Legierungsbestandteil Eisen zu einem erhöhten Übergangswiderstand, der sogar einen Ausfall eines Steckverbinders nach sich ziehen kann.

Hinsichtlich des Legierungsbestandteils Phosphor ist darauf hinzuweisen, dass bei einem Einsatz eines Steckverbinders in einem Bereich mit zwangsläufig höheren Temperaturen, wie dies beispielsweise im Motorraum eines Personenkraftwagens der Fall ist, die Haftfähigkeit der Zinnoberfläche beeinträchtigt wird. Diese kann zu einem Abblättern neigen, weil es eine Phase zwischen Phosphor und Zinn gibt, die diesen Defekt der Oberfläche herbeiführt, so dass eine einwandfreie Übertragung von insbesondere Signalströmen mit Steckverbindern in hohem Grade gefährdet ist.

Zur Beschichtung des Basiswerkstoffs ist diesem Stand der Technik zu entnehmen, dass eine Zinnlegierung zum Einsatz gelangen kann, welche bis zu 4 Gew.% Silber und/oder 0,1 bis 6,5 Gew.% Antimon, 0,1 bis 2 Gew.% Kupfer, 0,01 bis 0,5 Gew.% Nickel und außerdem bis zu 0,5 Gew.% Zink und/oder Phosphor enthält.

Eine derartige Zinnlegierung soll also bewusst neben Silber noch weitere Legierungsbestandteile aufweisen, und zwar unter anderem Nickel. Die Anwesenheit von Nickel in der Beschichtung ist jedoch mit dem Nachteil verbunden, dass der Übergangswiderstand eines Steckverbinders unzulässige Werte erreichen kann, die in der Praxis zu einem Ausfall eines Steckverbinders führen können.

Auch die US-PS 4, 971, 758 offenbart einen Basiswerkstoff, der neben Ni, Sn, Si und Zn ausdrücklich noch Fe und P verlangt.

Was die JP 100 60 562 betrifft, so hat deren Legierung den großen Nachteil, dass sie zusätzlich Magnesium aufweist. Eine Magnesium enthaltende Legierung ist indessen gießtechnisch schwer zu händeln, weil schon geringfügige Änderungen in der Magnesiumkonzentration zu völlig anderen mechanischen und physikalischen Werten führen können, so dass ein Steckverbinder ebenfalls nicht mit der gebotenen Zuverlässigkeit eingesetzt werden kann. Auch sind Oberflächenfehler aufgrund des Legierungsbestandteils Magnesium nicht zu vermeiden.

Bezüglich der US-PS 5, 508, 001 gilt ebenfalls die Feststellung, dass zusätzlich mindestens noch Fe und P sowie Mg verlangt werden.

Ein anderer Vorschlag gemäß der DE 44 43 461 C1 sieht vor, dass die schmelzflüssig aufgebrachte Oberflächenbeschichtung aus einer Zinnlegierung besteht, welche bis zu 5 Gew.-% Kobalt enthält. Neben Kobalt kann die Zinnlegierung auch Wismut und Indium sowie eine Vielzahl weiterer Legierungsmetalle enthalten.

Die bekannten Metallbänder bzw. die Steckverbinder haben sich in der Praxis bewährt. Jedoch steigen zunehmend die technischen und qualitativen Anforderungen der Kontaktbauteile hinsichtlich der mechanischen und elektrischen Eigenschaften. Dies gilt insbesondere beim Einsatz der Kontaktbauteile unter schwierigen oder aggressiven Umgebungsbedingungen, beispielsweise für Steckverbinder in der Kraftfahrzeugelektrik und hier vor allem in der Motorelektronik. Unter solch schwierigen Einsatzbedingungen können Anforderungen auftreten vor allem hinsichtlich Temperaturbeständigkeit, Relaxationsbeständigkeit, Korrosionsfestigkeit und Haftfestigkeit der Beschichtung, bei denen die bekannten Kontaktbauteile an ihre Grenze stoßen. Beobachtet wurde insbesondere bei scher- und biegebeanspruchten Bauteilen ein Abblättern (Peeling-off) der Oberflächenbeschichtung.

Der Erfindung liegt - ausgehend vom Stand der Technik die Aufgabe zugrunde, ein elektrisch leitfähiges Metallband zur Fertigung von elektrischen Kontaktbauteilen, insbesondere von Steckverbindern, zu schaffen mit verbesserten Hafteigenschaften zwischen Basiswerkstoff und Beschichtung unter Gewährleistung einer anforderungsgerechten Temperaturbeständigkeit und Oberflächenhärte, guten Gleiteigenschaften und einem stabilen Kontaktübergangswiderstand.

Die Lösung dieser Aufgabe besteht nach der Erfindung in den Merkmalen des Patentanspruchs 1 und einem hieraus hergestellten Steckverbinder nach Patentanspruch 2.

Der Basiswerkstoff besteht aus einer Kupfer-Nickel-Silizium-Legierung mit Nickelanteilen zwischen 1,4 und 1,7 Gew.-% sowie Siliziumanteilen zwischen 0,2 und 0,35 Gew.-%. Dieser Basislegierung sind Zinnanteile zwischen 0,02 und 0,3 Gew.-% und Zinkanteile zwischen 0,01 und 0,35 Gew.-% zulegiert.

Ferner wirkt sich die Zugabe von Silber vorteilhaft aus, und zwar in einem Anteil zwischen 0,05 und 0,2 Gew.-%. Die Legierungsbestandteile Zink und Silber beeinflussen das Diffusionsverhalten in der intermetallischen Phase zwischen dem Basiswerkstoff und der Beschichtung aus Zinn-Silber. Die zwangsläufig durch Diffusion von Kupfer in die Zinnschicht entstehenden Kupfer-Zinn-Phasen werden in ihrer Ausprägung über Temperatur und Zeit im Sinne einer Verlangsamung und Behinderung der Bildung speziell der sogenannten e-Phase beeinflusst. Hierdurch wird eine wesentlich bessere Haftfestigkeit zwischen Basiswerkstoff und Beschichtung gewährleistet. Damit werden Ablöseerscheinungen bzw. Peeling der Beschichtung auch bei ungünstigen und schwierigen Einsatzbedingungen der aus dem Metallband hergestellten Steckverbinder zu größeren Temperaturen und längeren Zeiten verschoben.

Die Zugabe von Zirkonium in einem Anteil zwischen 0,005 und 0,05 Gew.-% steigert zudem die Korrosions- und Temperaturbeständigkeit.

Magnesium erhöht die Festigkeit und die Spannungsrelaxationseigenschaft bei erhöhter Temperatur der Legierung bei nur geringer Beeinträchtigung der elektrischen Leitfähigkeit, die wie erwähnt auf dem Hauptbestandteil Kupfer beruht. Magnesium löst sich in der Kupfermatrix und ist als Wahlkomponente im Basiswerkstoff in einem Anteil bis zu 0,1 Gew.-% vorgesehen. Desweiteren kann der Basiswerkstoff danach Phosphor bis zu einem anteil von 0,05 Gew.-% enthalten. Das Phosphor wirkt als Desoxidant und trägt zusammen mit Magnesium zur Erhöhung der Festigkeit und der Spannungsrelaxationseigenschaft bei erhöhten Temperaturen bei. Auch trägt die Phosphorkomponente zur Erhaltung der Federkraft des Metallbandes bei Umformvorgängen bei.

Eine Verbesserung der Umformbarkeit und auch der Warmwalzbarkeit kann durch einen Eisenanteil bis zu 0,1 Gew.-% erreicht werden. Die Eisenkomponente verringert zudem die Korngröße bei Ausfällungen der Nickelund Siliziumverbindungen und wirkt der Ausbildung einer Rißstruktur entgegen, was wiederum positiv für die Haftfestigkeit zwischen Basiswerkstoff und Beschichtung ist.

Es hat sich herausgestellt, dass mit einer Beschichtung aus einer Zinn-Silber-Legierung, die einen Silberanteil zwischen 1,2 bis 2,5 Gew.-% aufweist, bisher nicht erzielte Eigenschaften der Haftfestigkeit zwischen Basiswerkstoff und Metallauflage erreicht werden. Durch die spezielle Größe der Zulegierung von Silber wird die Oberflächenhärte erhöht. Damit steigt aber gleichzeitig die Sprödigkeit der Metallauflage, was sich im Grunde nachteilig auf die Haftfestigkeit auswirken würde. Entgegen dieser grundsätzlichen Gesetzmäßigkeit konnten die an sich konträren Eigenschaften erfolgreich kompensiert werden. Gleichzeitig können positive Ergebnisse hinsichtlich der Temperaturbeständigkeit und der Gleiteigenschaften erzielt sowie ein stabiler Kontaktübergangswiderstand sichergestellt werden.

Fügt man der Zinn-Silber-Legierung wahlweise noch Indium hinzu, und zwar bis zu 10 Gew.-%, vorzugsweise jedoch zwischen 0,1 Gew.-% und 5 Gew.-%, so wird zwar der Schmelzpunkt erniedrigt, jedoch insgesamt die Beständigkeit gegen äußere Bedingungen verbessert. Zusätzlich werden die Löteigenschaften hierdurch positiv beeinflusst.

Wesentliche Ursache für ein mögliches alterungsbedingtes Versagen der Beschichtung gerade bei Temperaturen über 150°C ist eine überproportional schnelle Umwandlung der sogenannten η-Phase (Cu₆Sn₅) in die ε-Phase (Cu₃Sn) hinein bei der Ausbildung, ausgehend von der Phasengrenze zwischen Basiswerkstoff und Beschichtung aufgrund hoher Diffusionsgeschwindigkeiten. Die Erfindung macht sich nunmehr die Erkenntnis zu eigen, dass das Vorhandensein der e-Phase allein nicht notwendigerweise zu Ablösevorgängen an der Grenze zwischen Basiswerkstoff und Beschichtung führt, auch nicht bei einem durch den Umformvorgang hervorgerufenen Spannungszustand eines Steckverbinders. Wird die Ausprägung der ε-Phase unterbunden oder behindert, wirkt sich dies positiv auf die intermetallische

Phase und Langzeitbeständigkeit der Beschichtung aus.

Zink und Silber sowie das im Basiswerkstoff vorliegende Nickel sind in ihren erfindungsgemäß vorgesehenen Anteilen geeignet, beim Diffusionsvorgang und ihrer Teilnahme an der Bildung der intermetallischen Phase speziell durch Anreicherung in der Phasengrenze die schnelle Umwandlung von der η-Phase zur ε-Phase zu unterdrücken bzw. wesentlich zu verlangsamen mit dem Erfolg eines homogenen hochhaftenden Verbunds zwischen Basiswerkstoff und Beschichtung.

Die intermetallische Phase zwischen dem Basiswerkstoff und der Beschichtung ist sehr feinkömig und gleichmäßig. Hieraus resultieren eine gute Umformbarkeit, insbesondere Biegbarkeit, höhere Scherfestigkeiten und geringe Elastizitätsmodule sowie eine hohe Kriechbeständigkeit des erfindungsgemäßen Metallbands.

## Patentansprüche

1. Elektrisch leitfähiges Metallband zur Fertigung von elektrischen Kontaktbauteilen, insbesondere von Steckverbindern, mit einem Basiswerkstoff aus einer Kupferlegierung, und einer schmelztechnisch aufgebrachten metallischen Beschichtung aus einer Legierung, die aus Zinn (Sn) und 1.2-2.5 Gew.% Silber (Ag) sowie einer Wahlkomponente von bis zu 10 Gew.-%, vorzugsweise zwischen 0,1 Gew.-% und 5 Gew.-%, Indium (In) besteht, wobei zwischen dem Basiswerkstoff, der aus
| | |
|---|---|
| Nickel (Ni) | 1,4bis 1,7 |
| Silizium (Si) | 0,2 bis 0,35 |
| Zinn (Sn) | 0,02 bis 0,3 |
| Zink (Zn) | 0,01 bis 0,35 |
| Silber (Ag) | 0,05 bis 0,2 |
| Zirkonium (Zr) | 0,005 bis 0,05 |
Rest Kupfer einschließlich einer möglichen Wahlkomponente, die aus bis zu 0,1 Gew.-% Magnesium (Mg), bis zu 0,05 Gew.-% Phosphor (P) oder bis zu 0,1 Gew.-% Eisen (Fe) sowie erschmelzungsbedingter Verunreinigungen besteht und der Beschichtung eine intermetallische Phase ausgebildet ist.

2. Steckverbinder aus einem Metallband nach Patentanspruch 1.

## Claims

1. Electrically conductive metal tape for the production of electrical contact components, in particular plug connectors, comprising a base material made of a copper alloy, and a metal coating applied by melting made of an alloy consisting of tin (Sn) and 1.2 to 2.5 % by weight silver (Ag) as well as an optional component of up to 10 % by weight, preferably between 0.1 % by weight and 5 % by weight, indium (In), wherein an intermetallic phase is formed between the base material which consists of
| | |
|---|---|
| Nickel (Ni) | 1.4 to 1.7 |
| Silicon (Si) | 0.2 to 0.35 |
| Tin (Sn) | 0.02 to 0.3 |
| Zinc (Zn) | 0.01 to 0.35 |
| Silver (Ag) | 0.05 to 0.2 |
| Zirconium (Zr) | 0.005 to 0.05 |
the remainder copper including a possible optional component which consists of up to 0.1 % by weight magnesium (Mg), up to 0.05 % by weight phosphorous (P) or up to 0.1 % by weight iron (Fe) as well as impurities caused by melting and the coating.

2. Plug connector made of a metal tape according to claim 1.

## Revendications

1. Bande métallique conductrice de l'électricité pour la fabrication d'éléments de contacts électriques, en particulier de connecteurs mâles-femelles, comprenant une matière de base faite d'un alliage de cuivre et un revêtement métallique déposé par la technique de fusion et fait d'un alliage qui est composé d'étain (Sn) et de 1,2 - 2,5 % en poids d'argent (Ag) ainsi que comme composant facultatif jusqu'à 10 % en poids, de préférence entre 0,1 % en poids et 5 % en poids d'indium (In),
pour laquelle
une phase intermétallique se forme entre le revêtement et la matière de base composée de
| | |
|---|---|
| Nickel (Ni) | 1,4 à 1,7 |
| Silicium (Si) | 0,2 à 0,35 |
| Etain (Sn) | 0,02 à 0,3 |
| Zinc (Zn) | 0,01 à 0,35 |
| Argent (Ag) | 0,05 à 0,2 |
| Zirconium (Zr) | 0,005 à 0,05, |
le reste étant du cuivre, y compris un composant facultatif éventuel qui est composé de jusqu'à 0,1 % en poids de magnésium (Mg), de jusqu'à 0,05 % en poids de phosphore (P) ou de jusqu'à 0,1 % en poids de fer (Fe), ainsi que d'impuretés dues à la fusion.

2. Connecteur mâle-femelle fait à partir d'une bande métallique selon la revendication 1.
